(19) Europäisches Patentamt
European Patent Office
Office européen des brevets

(11) EP 4 293 080 A1

(12) EUROPEAN PATENT APPLICATION

(43) Date of publication:
**20.12.2023 Bulletin 2023/51**

(21) Application number: **22179479.5**

(22) Date of filing: **16.06.2022**

(51) International Patent Classification (IPC):
***C08L 71/12*** *(2006.01)*

(52) Cooperative Patent Classification (CPC):
(C-Sets available)
**C08L 71/12** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SHPP Global Technologies B.V.**
**4612 PX Bergen op Zoom (NL)**

(72) Inventors:
- **MAO, Rui**
  **Shanghai (CN)**
- **SONG, Shijie**
  **Shanghai (CN)**
- **CHEN, Haiming**
  **Shanghai (CN)**

(74) Representative: **Dehns**
**St. Bride's House**
**10 Salisbury Square**
**London EC4Y 8JD (GB)**

# (54) POLYPHENYLENE ETHER COMPOSITION WITH EXCELLENT FLAMMABILITY AND DIELECTRIC PROPERTIES

(57) Disclosed herein are compositions comprising: from about 35 wt. % to about 85 wt. % of a polyphenylene ether component; from about 1 wt. % to about 55 wt. % of a polystyrene component; and from about 5 wt. % to about 25 wt. % of a flame retardant agent comprising an aromatic phosphoric ester, wherein the combined weight percent value of all components does not exceed 100 wt %, and all weight percent values are based on the total weight of the composition. The composition may exhibit at least a VI flame rating at 1.5 mm measured according to UL 94 (2021) and a dissipation factor less than 0.002 when tested using a split post dielectric resonator and network analyzer.

EP 4 293 080 A1

(52) Cooperative Patent Classification (CPC): (Cont.)

C-Sets
**C08L 71/12, C08K 5/0066, C08K 5/523,**
**C08L 25/04;**
**C08L 71/12, C08K 5/523, C08L 25/04,**
**C08L 83/12**

## Description

### FIELD OF THE DISCLOSURE

The present disclosure relates to materials comprising polyphenylene ether, and in particular to polyphenylene ether materials with improved flame performance.

### BACKGROUND

Dielectric properties are often key to the usefulness of thermoplastics for certain applications, particularly for telecommunications applications such as 5G networks. Low dielectric constant Dk and low dissipation factor Df materials provide radio frequency (RF) efficiency and are thus desirable properties of a given thermoplastic for such applications. Flame retardancy is also increasingly important in electronic applications. The materials for these applications should thus exhibit both good dielectric properties and flame retardancy. Traditional thermoplastic options for telecommunications applications such as polyimide (PI) and liquid crystal polymer (LCP) have good flame retardancy, but exhibit less desirable dielectric properties. Polyphenylene-ether resin (PPE), having a low dielectric constant (Dk of about 2.6) and low dissipation factor (Df of about 0.0009) at 1.9GHz, is typically a suitable dielectric material for antenna applications in electronics. PPE however is difficult to process. To alleviate the poor processability, polystyrene (PS) is usually added to improve flow but at the cost of flammability. There remains a need in the art for thermoplastic compositions that balance flame retardance, flowability, and dielectric performance.

### SUMMARY

The above-described and other deficiencies of the art are met by thermoplastic compositions comprising from about 35 wt. % to about 85 wt. % of a polyphenylene ether component; from about 1 wt. % to about 55 wt. % of a polystyrene component; and from about 5 wt. % to about 25 wt. % of a flame retardant agent comprising an aromatic phosphoric ester, wherein the combined weight percent value of all components does not exceed 100 wt %, and all weight percent values are based on the total weight of the composition. The composition may exhibit at least a V1 flame rating at 1.5 mm measured according to UL 94 (2021) and a dissipation factor less than 0.002 when tested using a split post dielectric resonator and network analyzer.

The above described and other features are exemplified by the following detailed description, examples, and claims.

### DETAILED DESCRIPTION OF ILLUSTRATIVE EMBODIMENTS

The present disclosure may be understood more readily by reference to the following detailed description of desired embodiments and the examples included therein. In the following specification and the claims that follow, reference will be made to a number of terms which have the following meanings. Also, within the scope of the disclosure are articles of manufacture prepared according to any of the methods described herein. For example, articles that can be produced using the materials and methods of the disclosure include those in the electrical field, for example, computer, antenna and lighting articles.

Low dielectric constant Dk and low dissipation factor Df materials provide radio frequency (RF) efficiency and are thus desirable properties of a given thermoplastic for such applications for telecommunications applications such as 5G networks. In recent years, flame retardance has become increasingly important in electronic applications, particularly for personal items such as tablets, laptops, and cellphones. Materials for these applications desirably exhibit good dielectric properties and flame retardancy.

Traditionally, polyimide (PI) thermoplastics were employed for antenna, but the Dk and Df values are relatively high and the moisture uptake results in poor reliability. Liquid crystal polymer (LCP), another conventional thermoplastic option, featured relatively high Dk and Df. Still, while plagued with less desirable dielectric properties, both PI and LCP exhibit good flame retardancy. Polyphenylene-ether resin (PPE), having a low dielectric constant (Dk of about 2.6) and low dissipation factor (Df of about 0.0009), is typically a suitable dielectric material for antenna applications in electronics. PPE however is difficult to process. To alleviate the poor processability, polystyrene (PS) is usually added to improve flow but at the cost of flammability. Conventional flame retardants in use with PPE often increase the Dk and Df values thereby increasing the reduced signal loss typically obtained by using PPE. Compositions of the present disclosure however provide PPE-based compositions that can achieve both low values for Dk and Df while also maintaining excellent flame retardancy and flowability.

United States Patent No. US 7,371,790 discloses polyphenylene ether compositions comprising styrene and a phosphoric ester flame retardant. These compositions however do not address the dielectric properties and flow

properties as described herein and feature a polyolefin resin component. Japanese Patent Publication No. JP 2004137491 discloses compositions combining polyphenylene ether, polystyrene, and epoxy. These compositions do not address the flow properties as well as other physical properties (for example, heat deflection temperature) as described herein. Japanese Patent Publication No. JP 2017110072 discloses polyphenylene-ether based resin combined with aromatic condensed phosphate ester compounds to improve flame retardance. These compositions however require further components including zirconium and hafnium compounds. Japanese Patent Publication No. JP 2019073600A discloses mixed polyphenylene-ether based resins combined with styrene resin and organophosphorous compounds to provide heat resistance, dimensional stability, and acid resistance, et. al. These compositions however require further components including aluminum and carbon black, thereby altering dielectric performance (which can increase both Dk and Df).

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting. Various combinations of elements of this disclosure are encompassed by this disclosure, for example, combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including matters of logic with respect to arrangement of steps or operational flow; plain meaning derived from grammatical organization or punctuation; and the number or type of embodiments described in the specification.

*Thermoplastic Composition*

Aspects of the disclosure relate to thermoplastic composition comprising at least a polyphenylene ether (PPE) (also referred to as a polyphenylene oxide, PPO), a polystyrene component, and a - flame retardant agent comprising an aromatic phosphoric ester. Further aspects of the disclosure relate to thermoplastic compositions comprising a polyphenylene ether component; a poly(phenylene ether)-polysiloxane block copolymer comprising a poly(phenylene ether) block, and a polysiloxane block comprising, on average, 20 to 80 siloxane repeat units; a polystyrene component, and a flame retardant agent comprising an aromatic phosphoric ester.

The disclosed compositions exhibit improved flow, flame retardance, and dielectric performance. In some aspects, these properties are yet further improved where the composition comprises a polyphenylene ether component; a poly(phenylene ether)-polysiloxane block copolymer comprising a poly(phenylene ether) block, and a polysiloxane block comprising, on average, 20 to 80 siloxane repeat units; a polystyrene component, and a flame retardant agent comprising an aromatic phosphoric ester.

In various aspects, the present disclosure provides compositions useful for the manufacture of electronics, including antenna. These materials have been evaluated for flame retardance and dielectric properties as well as mechanical/physical performance.

***Polyphenylene Oxide***

In various aspects, the disclosed composition may comprise a polyphenylene ether such as polyphenylene oxide (a "poly(p-phenylene oxide") PPO. PPO may describe polymers containing optionally substituted phenyl rings linked with oxygen (O) and can be used interchangeably with poly(p-phenylene ether) or poly (2,6 dimethyl-p-phenylene oxide). Further, the disclosed composition may comprise a specific combination of PPO resins that provide the composition with a balance of certain properties. The polyphenylene oxide may be present as a polyphenylene oxide resin. In further aspects, the polyphenylene oxide may be present as a polyphenylene oxide copolymer.

Certain aspects of the composition include from greater than 20 wt. % to about 35 wt. % of a polyphenylene oxide or a polyphenylene oxide copolymer. Polyphenylene sulfide may be present in the disclosed compositions in an amount of about 30 wt. % % to about 70 wt. % based on the total weight of the composition. For example, polyphenylene sulfide may be present in the amount of 21 wt. % to 35 wt. %, 25 wt. % to 35 wt. %, 28 wt. % to 35 wt.%, or 20 wt. % to 34 wt. %.

In further aspects, the composition may comprise poly(arylene) ether derivative, namely a poly(arylene ether)-polysiloxane block copolymer such as a poly(phenylene ether) polysiloxane copolymer reaction product. According to various aspects, the poly(arylene ether)-polysiloxane block copolymer reaction product may comprise a poly(arylene ether) homopolymer, and a poly(arylene ether)-polysiloxane block copolymer comprising a poly(arylene ether) block, and a polysiloxane block comprising, on average, about 20 to about 80 siloxane repeating units. The poly(arylene

ether)-polysiloxane block copolymer reaction product may comprise about 1 to about 30 wt. % siloxane repeating units and about 70 to about 99 wt. % arylene ether repeating units.

The poly(arylene ether)-polysiloxane block copolymer reaction product may be formed according to a process comprising oxidatively copolymerizing a monomer mixture comprising a monohydric phenol and a hydroxyaryl-terminated polysiloxane. An important component of the present composition is a poly(arylene ether)-polysiloxane block copolymer reaction product (alternatively herein as "reaction product") comprising a poly(arylene ether)-polysiloxane block copolymer and a poly(arylene ether) homopolymer. The poly(arylene ether)-polysiloxane block copolymer reaction product may be synthesized by oxidative polymerization of a mixture of monohydric phenol and a hydroxyaryl-terminated polysiloxane. This oxidative polymerization produces poly(arylene ether)-polysiloxane block copolymer as the desired product and poly(arylene ether) homopolymer as a by-product. It is difficult and unnecessary to separate the poly(arylene ether) homopolymer from the poly(arylene ether)-polysiloxane block copolymer. The poly(arylene ether)-polysiloxane block copolymer is therefore incorporated into the present composition as a "poly(arylene ether)-polysiloxane block reaction product" that comprises both the poly(arylene ether) and the poly(arylene ether)-polysiloxane block copolymer.

The poly(arylene ether)-polysiloxane block copolymer may comprise poly(arylene ether) block and a polysiloxane block. The poly(arylene ether) block is a residue of the polymerization of the monohydric phenol. In some embodiments, the poly(arylene ether) block comprises arylene ether repeating units having the structure

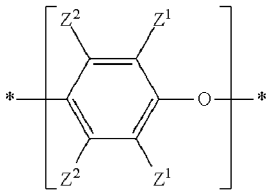

wherein for each repeating unit, each $Z^1$ is independently halogen, unsubstituted or substituted $C_1$-$C_{12}$ hydrocarbyl provided that the hydrocarbyl group is not tertiary hydrocarbyl, $C_1$-$C_{12}$ hydrocarbylthio, $C_1$-$C_{12}$ hydrocarbyloxy, or $C_2$-$C_{12}$ halohydrocarbyloxy wherein at least two carbon atoms separate the halogen and oxygen atoms; and each $Z^2$ is independently hydrogen, halogen, unsubstituted or substituted $C_1$-$C_{12}$ hydrocarbyl provided that the hydrocarbyl group is not tertiary hydrocarbyl, $C_1$-$C_{12}$ hydrocarbylthio, $C_1$-$C_{12}$ hydrocarbyloxy, or $C_2$-$C_{12}$ halohydrocarbyloxy wherein at least two carbon atoms separate the halogen and oxygen atom. In some aspects, the poly(arylene ether) block comprises 2,6-dimethyl-1,4-phenylene ether repeating units, that is, repeating units having the structure

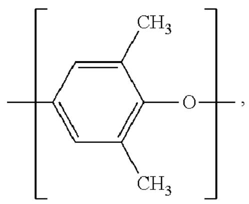

2,3,6-trimethyl-1,4-phenylene ether repeating units, or a combination thereof.

The polysiloxane block may be a residue of the hydroxyaryl-terminated polysiloxane. In some aspects, the polysiloxane block may comprise repeating units having the structure

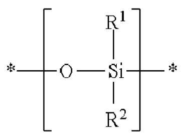

wherein each occurrence of $R^1$ and $R^2$ is independently hydrogen, $C_1$-$C_{12}$ hydrocarbyl or $C_1$-$C_{12}$ halohydrocarbyl; and the polysiloxane block further comprises a terminal unit having the structure

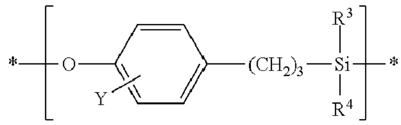

wherein Y is hydrogen, $C_1$-$C_{12}$ hydrocarbyl, $C_1$-$C_{12}$ hydrocarbyloxy, or halogen, and wherein each occurrence of $R^3$ and $R^4$ is independently hydrogen, $C_1$-$C_{12}$ hydrocarbyl or $C_1$-$C_{12}$ halohydrocarbyl. In some embodiments, the polysiloxane repeating units comprise dimethylsiloxane ($-Si(CH_3)_2O-$) units. In some embodiments, the polysiloxane block has the structure

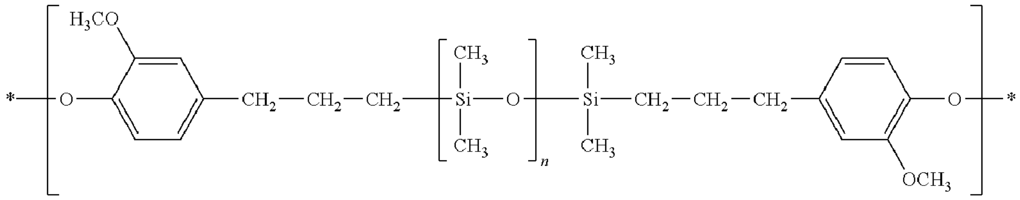

wherein n is 20 to 60.

The hydroxyaryl-terminated polysiloxane may comprise at least one hydroxyaryl terminal group. In some aspects, the hydroxyaryl-terminated polysiloxane has a single hydroxyaryl terminal group, in which case a poly(arylene ether)-polysiloxane diblock copolymer is formed. In other aspects, the hydroxyaryl-terminated polysiloxane has two hydroxyaryl terminal groups, - in which case poly(arylene ether)-polysiloxane diblock copolymers and/or poly(arylene ether)-polysiloxane-poly(arylene ether) triblock copolymers are formed. It is also possible for the hydroxyaryl-terminated polysiloxane to have a branched structure that allows three or more hydroxyaryl terminal groups and the formation of corresponding branched copolymers.

In some aspects, the hydroxyaryl-terminated polysiloxane comprises, on average, about 20 to about 80 siloxane repeating units, specifically about 25 to about 70 siloxane repeating units, more specifically about 30 to about 60 siloxane repeating units, still more specifically about 35 to about 50 siloxane repeating units, yet more specifically about 40 to about 50 siloxane repeating units. The number of siloxane repeating units in the polysiloxane block is essentially unaffected by the copolymerization and isolation conditions, and it is therefore equivalent to the number of siloxane repeating units in the hydroxyaryl-terminated polysiloxane starting material. When not otherwise known, the average number of siloxane repeating units per hydroxylaryl-terminated polysiloxane molecule can be determined by NMR methods.

In various aspects, the poly(arylene ether)-polysiloxane block copolymer reaction product has a weight average molecular weight of at least 30,000 atomic mass units (amu). For example, the reaction product may have a weight average molecular weight of 30,000 to about 150,000 amu, 35,000 to about 120,000 amu, 40,000 to about 90,000 amu, or about 45,000 to about 70,000 amu. In further, the poly(arylene ether)-polysiloxane block copolymer reaction product has a number average molecular weight of about 10,000 to about 50,000 amu, or10,000 to about 30,000 amu, or about 14,000 to about 24,000 amu.

In some embodiments, the poly(arylene ether)-polysiloxane block copolymer reaction product has an intrinsic viscosity of at least 0.3 deciliters per gram, as measured at 25 °C. in chloroform, or from about 0.3 to about 0.5.

An indication of the efficiency with which the hydroxyaryl-terminated polysiloxane is incorporated into block copolymer may be the low concentration of so-called poly(arylene ether) "tail" groups. In a homopolymerization of 2,6-dimethylphenol, a large fraction of product molecules have a so-called head-to-tail structure in which the linear product molecule is terminated on one end by a 3,5-dimethyl-4-hydroxyphenyl "head" and on the other end by a 2,6-dimethylphenoxy "tail."

The poly(arylene ether)-polysiloxane block copolymer reaction product can further include groups derived from a diphenoquinone, which is itself an oxidation product of the monohydric phenol. For example, when the monohydric phenol is 2,6-dimethylphenol, the diphenoquinone is 3,3',5,5'-tetramethyl-4,4'-diphenoquinone. During the build phase of the reaction, the diphenoquinone is typically incorporated into the "tail" end of a head-to-tail poly(arylene ether) as the corresponding biphenyl group. Through further reactions, the terminal biphenyl group can become an internal biphenyl group in the poly(arylene ether) chain.

The oxidative copolymerization may be conducted with a reaction time greater than or equal to 110 minutes. The reaction time is the elapsed time between initiation and termination of oxygen flow (may be any oxygen-containing gas). In some embodiments, the reaction time is 110 to about 300 minutes, specifically about 140 to about 250 minutes, more specifically about 170 to about 220 minutes. The oxidative copolymerization may include a "build time" of about 80 to about 160 minutes. In some embodiments, the reaction temperature during at least part of the build time can be

about 40 to about 60 °C., specifically about 45 to about 55 °C.

The poly(arylene ether)-polysiloxane block copolymer reaction product may be isolated from solution by an isolation procedure that minimizes volatile and nonvolatile contaminants. For example, in some embodiments, the thermoplastic composition comprises less than or equal to 1 wt. % of total volatiles, specifically 0.2 to 1 wt. % of total volatiles, determined according to the procedure in the working examples below. In some embodiments, the monomer mixture is oxidatively copolymerized in the presence of a catalyst comprising a metal (such as copper or manganese), and the poly(arylene ether)-polysiloxane block copolymer reaction product comprises less than or equal to 100 parts per million by weight of the metal based on the weight of the poly(arylene ether)-polysiloxane block copolymer reaction product.

Certain isolation procedures may ensure that the polysiloxane content of the reaction product consists essentially of poly(arylene ether)-polysiloxane block copolymer and poly(arylene ether) homopolymer. After termination of the copolymerization reaction, the poly(arylene ether)-polysiloxane block copolymer reaction product can be isolated from solution using methods known in the art for isolating poly(arylene ether)s from solution.

In some embodiments, the poly(arylene ether)-polysiloxane block copolymer reaction product incorporates greater than 75 wt. %, of the hydroxyaryl-terminated polysiloxane starting material into the poly(arylene ether)-polysiloxane block copolymer. Specifically, the amount of the hydroxyaryl-terminated polysiloxane incorporated into the poly(arylene ether)-polysiloxane block copolymer can be at least 80 wt. %, more specifically at least 85 wt. %, still more specifically at least 90 wt. %, yet more specifically at least 95 wt. %. Additional details relating to the preparation, characterization, and properties of the poly(arylene ether)-polysiloxane block copolymer reaction product can be found in U.S. Patent No. US 8,017,697 of Carillo et al. and in copending U.S. Patent No. US 8,669,332.

The poly(arylene ether)-polysiloxane block copolymer reaction product may comprise about 1 to about 30 wt. % siloxane repeating units and about 70 to about 99 wt. % arylene ether repeating units, based on the total weight of the reaction product. It will be understood that the siloxane repeating units are derived from the hydroxyaryl-terminated polysiloxane, and the arylene ether repeating units are derived from the monohydric phenol. In some embodiments, such as, for example, when the poly(arylene ether)-polysiloxane block copolymer reaction product is purified via precipitation in isopropanol, the siloxane repeating units consist essentially of the residue of hydroxyaryl-terminated polysiloxane that has been incorporated into the poly(arylene ether)-polysiloxane block copolymer.

In some aspects, the reaction product may comprise about 1 to about 8 wt. % siloxane repeating units and about 12 to about 99 wt. % arylene ether repeating units, based on the total weight of the reaction product. Within these ranges, the amount of siloxane repeating units can be 2 to 7 wt. %, specifically 3 to 6 wt. %, more specifically 4 to 5 wt. %; and the amount of arylene ether repeating units can be 93 to 98 wt. %, specifically 94 to 97 wt. %, more specifically 95 to 96 wt. %.

In some aspects, the poly(arylene ether)-polysiloxane block copolymer reaction product comprises about 8 to about 30 wt. % siloxane repeating units and about 70 to about 92 wt. % arylene ether repeating units, based on the total weight of the reaction product. Within these ranges, the amount of siloxane repeating units can be about 10 to about 27 wt. %, specifically about 12 to about 24 wt. %, more specifically about 14 to about 22 wt. %, even more specifically about 16 to about 20 wt. %; and the amount of arylene ether repeating units can be about 74 to about 90 wt. %, specifically about 76 to about 88 wt. %, more specifically about 78 to about 86 wt. %, yet more specifically about 80 to about 84 wt. %. In other aspects, the poly(arylene ether)-polysiloxane block copolymer reaction product comprises about 15 to about 25 wt. % siloxane repeating units and about 75 to 85 wt. % arylene ether repeating units. Within the range of 15 to about 25 wt. % siloxane repeating units, the wt. % siloxane repeating units can be about 16 to about 24 wt. %, specifically about 17 to about 22 wt. %, more specifically about 18 to about 20 wt. %. Within the range of about 75 to 85 wt. %, the wt. % arylene ether repeating units can be about 76 to about 84 wt. %, specifically about 78 to about 83 wt. %, more specifically about 80 to about 82 wt. %.

In some embodiments, the poly(arylene ether)-polysiloxane block copolymer reaction product comprises 15 to about 25 wt. % siloxane repeating units and about 75 to 85 wt. % arylene ether repeating units. Within the range of 15 to about 25 wt. % siloxane repeating units, the wt. % of siloxane repeating units can be about 16 to about 24 wt. %, specifically about 17 to about 22 wt. %, even more specifically about 18 to about 20 wt. %. Within the range of about 75 to 85 wt. %, the wt. % of arylene ether repeating units can be about 76 to about 84 wt. %, specifically about 78 to about 83 wt. %, more specifically about 80 to about 82 wt. %. These repeating unit amounts are particularly applicable to thermoplastic composition after precipitation from isopropanol, which substantially removes free hydroxyaryl-terminated polysiloxane.

In some embodiments, the composition comprises the poly(arylene ether)-polysiloxane block copolymer reaction product in an amount of 8 wt. % to about 50 wt. %, the composition comprises about 67 to about 87 wt. % of the poly(arylene ether)-polysiloxane block copolymer reaction product.

***Flame Retardant***

In various aspects, the disclosed composition may comprise a flame retardant additive, specifically, a phosphate-based flame retardant additive.

According to various aspects of the present disclosure, the flame retardant agent may comprise an aromatic phosphoric ester according to Formula I.

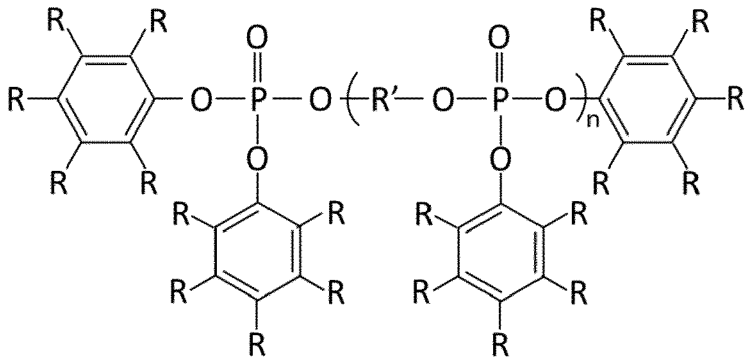

Each occurrence of R may be independently unsubstituted or substituted $C_1$-$C_{12}$ hydrocarbyl and at least one R is not unsubstituted; n has an average value of 1 or more , and each occurrence of R' can be selected from

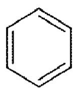 , 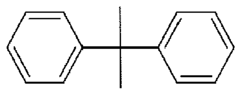 ,

and

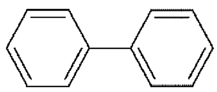 .

In specific aspects, the aromatic phosphoric ester may comprise a compound according to Formula II.

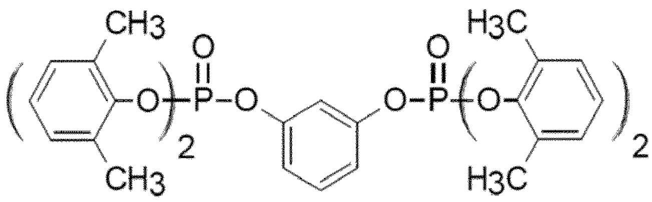

Formula II

The aromatic phosphoric ester may be available commercially as PX-200 from Daihachi Chemical Industry Co., Ltd.

Certain aspects of the composition include from 5 wt. % to about 25 wt. % of the flame retardant agent comprising an aromatic phosphoric ester. For example, the aromatic phosphoric ester flame retardant may be present in the amount of 6 wt. % to 22 wt. %, 8 wt. % to 20 wt. %, 8 wt. % to 15 wt.%, or 6 wt. % to 15 wt. %.

*Polystyrene*

In various aspects, the disclosed composition may comprise a polystyrene polymer. The term "polystyrene" as used herein includes polymers prepared by bulk, suspension and emulsion polymerization, which contain at least 25% by weight of polymer precursors having structural units derived from a monomer of the formula (I):

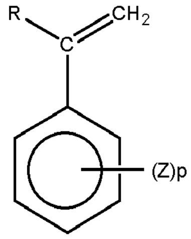

(I)

wherein R is hydrogen, lower alkyl or halogen; Z is vinyl, halogen or lower alkyl; and p is from 0 to about 5. These organic polymers include homopolymers of styrene, chlorostyrene and vinyltoluene, random copolymers of styrene with one or more monomers illustrated by acrylonitrile, butadiene, alpha -methylstyrene, ethylvinylbenzene, divinylbenzene and maleic anhydride, and rubber-modified polystyrenes including blends and grafts, wherein the rubber is a polybutadiene or a rubbery copolymer of about 98 to about 70 wt% styrene and about 2 to about 30 wt% diene monomer. Polystyrenes are generally miscible with polyphenylene ether.

In certain aspects, the composition may comprise a general purpose polystyrene. The present composition may comprise from about 0.5 wt. % to about 55 wt. % of a polystyrene such as general purpose polystyrene (GPPS). In yet further aspects, the polystyrene is a high impact polystyrene (HIPS).

### *Impact Modifier*

The compositions of the present disclosure may also include an impact modifier. Impact modifiers may comprise functionalized polyolefin ethylene-acrylate terpolymers, such as ethylene-acrylic esters-maleic anhydride (MAH) or glycidyl methacrylate (GMA). The functionalized rubbery polymer can optionally contain repeat units in its backbone which are derived from an anhydride group containing monomer, such as maleic anhydride. In another scenario, the functionalized rubbery polymer can contain anhydride moieties which are grafted onto the polymer in a post polymerization step.

In certain aspects, the impact modifier may comprise an elastomer-modified graft copolymer. The elastomer-modified graft copolymer may comprise a styrene-rubber copolymer. Styrene rubber copolymers may include styrene-butadiene-styrene (SBS), styrene-butadiene rubber (SBR), styrene-ethylene-butadiene-styrene (SEBS), styrene ethylene propylene styrene (SEPS), ABS (acrylonitrile-butadiene-styrene), acrylonitrile-ethylene-propylene-diene-styrene (AES), styrene-isoprene-styrene (SIS), methyl methacrylate-butadiene-styrene (MBS), and styrene-acrylonitrile (SAN). An example SEBS impact modifier is high flow SEBS with a melt flow index that is greater than 3 g / 10 min at 230°C / 5 kg when tested in accordance with ISO-1133.

As noted above, in certain examples the composition disclosed herein includes from 0.01 wt. % to 12 wt. %, or from about 0.1 wt. % to about 10 wt. % of the impact modifier. In other examples, the composition includes from 0.1 wt. % to 8 wt. % of the impact modifier, or about 1 wt. % to about 8 wt. % of the impact modifier , or from about 2 wt. % to about 12 wt. % of the impact modifier, or from about 3 wt. % to about 10 wt. % of the impact modifier, or from about 2 wt. % to about 10 wt. % of the impact modifier, or even from about 2 wt. % to about 6 wt. % of the impact modifier.

### *Additives*

The composition can include various additives ordinarily incorporated into polymer compositions of this type, with the proviso that the additive(s) are selected so as to not significantly adversely affect the desired properties of the thermoplastic composition (good compatibility for example). Such additives can be mixed at a suitable time during the mixing of the components for forming the composition. The total amount of all of the additives in the resin composition can be, for example, 0.001 to 12 wt% each based on the total weight of the composition. Suitable additives can include ultraviolet agents, ultraviolet stabilizers, heat stabilizers, antistatic agents, anti-microbial agents, anti-drip agents, radiation stabilizers, pigments, dyes, fibers, fillers, plasticizers, fibers, flame retardants, antioxidants, lubricants, wood, glass, and metals, and combinations thereof.

The composite disclosed herein can comprise one or more additional fillers. The filler can be selected to impart additional impact strength and/or provide additional characteristics that can be based on the final selected characteristics of the polymer composition. In certain aspects, the composite may comprise a glass fiber filler. In yet further aspects, the composite may be free or substantially free of a glass filler.

Additional appropriate fillers or reinforcing agents can include, for example, mica, clay, feldspar, quartz, quartzite, perlite, tripoli, diatomaceous earth, aluminum silicate (mullite), synthetic calcium silicate, fused silica, fumed silica, sand, boron-nitride powder, boron-silicate powder, calcium sulfate, calcium carbonates (such as chalk, limestone, marble, and synthetic precipitated calcium carbonates) talc (including fibrous, modular, needle shaped, and lamellar talc), wollastonite, hollow or solid glass spheres, silicate spheres, cenospheres, aluminosilicate or (armospheres), kaolin, whiskers of silicon

carbide, alumina, boron carbide, iron, nickel, or copper, continuous and chopped carbon fibers or glass fibers, molybdenum sulfide, zinc sulfide, barium titanate, barium ferrite, barium sulfate, heavy spar, titanium dioxide, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch , lignin, ground nut shells, or rice grain husks, reinforcing organic fibrous fillers such as poly(ether ketone), polyimide, polybenzoxazole, poly(phenylene sulfide), polyesters, polyethylene, aromatic polyamides, aromatic polyimides, polyetherimides, polytetrafluoroethylene, and poly(vinyl alcohol), as well combinations comprising at least one of the foregoing fillers or reinforcing agents. The fillers and reinforcing agents can be coated, or surface treated, with silanes for example, to improve adhesion and dispersion with the polymer matrix. Fillers generally can be used in amounts of 1 to 200 parts by weight, based on 100 parts by weight of based on 100 parts by weight of the total composition.

The additive composition can include a flow modifier, reinforcing agent, antioxidant, heat stabilizer, light stabilizer, ultraviolet light stabilizer, ultraviolet absorbing additive, plasticizer, lubricant, release agent, antistatic agent, antifog agent, antimicrobial agent, chain extender, colorant, de-molding agents, flow promoter, flow modifier, surface effect additive, radiation stabilizer, flame retardant, anti-drip agent, or any combination thereof.

Heat stabilizer additives include organophosphites (e.g. triphenyl phosphite, tris-(2,6-dimethylphenyl)phosphite, tris-(mixed mono-and di-nonylphenyl)phosphite or the like), phosphonates (e.g., dimethylbenzene phosphonate or the like), phosphates (e.g., trimethyl phosphate, or the like), or combinations comprising at least one of the foregoing heat stabilizers. The heat stabilizer can be tris(2,4-di-t-butylphenyl) phosphate available as IRGAPHOS™ 168. Heat stabilizers are generally used in amounts of 0.01 to 5 wt%, based on the total weight of polymer in the composition.

There is considerable overlap among plasticizers, lubricants, and mold release agents, which include, for example, glycerol tristearate (GTS), phthalic acid esters (e.g., octyl-4,5-epoxy-hexahydrophthalate), tris-(octoxycarbonylethyl)isocyanurate, tristearin, di- or polyfunctional aromatic phosphates (e.g., resorcinol tetraphenyl diphosphate (RDP), the bis(diphenyl) phosphate of hydroquinone and the bis(diphenyl) phosphate of bisphenol A); poly-alpha-olefins; epoxidized soybean oil; silicones, including silicone oils (e.g., poly(dimethyl diphenyl siloxanes); esters, for example, fatty acid esters (e.g., alkyl stearyl esters, such as, methyl stearate, stearyl stearate, and the like), waxes (e.g., beeswax, montan wax, paraffin wax, or the like), or combinations comprising at least one of the foregoing plasticizers, lubricants, and mold release agents. These are generally used in amounts of 0.01 to 5 wt%, based on the total weight of the polymer in the composition.

Light stabilizers, in particular ultraviolet light (UV) absorbing additives, also referred to as UV stabilizers, include hydroxybenzophenones (e.g., 2-hydroxy-4-n-octoxy benzophenone), hydroxybenzotriazines, cyanoacrylates, oxanilides, benzoxazinones (e.g., 2,2'-(1,4- phenylene)bis(4H-3,1-benzoxazin-4-one, commercially available under the trade name CYASORB™ UV-3638 from Cytec Industries Inc., Woodland, NJ), aryl salicylates, hydroxybenzotriazoles (e.g., 2-(2-hydroxy-5-methylphenyl)benzotriazole, 2-(2-hydroxy-5-tert-octylphenyl)benzotriazole, and 2-(2H-benzotriazol-2-yl)-4-(1,1,3,3-tetramethylbutyl)-phenol, commercially available under the trade name CYASORB™ 5411 from Cytec Industries Inc., Woodland, NJ) or combinations comprising at least one of the foregoing light stabilizers. The UV stabilizers can be present in an amount of 0.01 to 1 wt%, specifically, 0.1 to 0.5 wt%, and more specifically, 0.15 to 0.4 wt%, based upon the total weight of polymer in the composition.

Antioxidant additives include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite; alkylated monophenols or polyphenols; alkylated reaction products of polyphenols with dienes, such as tetrakis[methylene(3,5-di-tert-butyl-4-hydroxyhydrocinnamate)] methane; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate; amides of beta-(3,5-di-tert-butyl-4-hydroxyphenyl)-propionic acid, or combinations comprising at least one of the foregoing antioxidants. Antioxidants are used in amounts of 0.01 to 0.1 parts by weight, based on 100 parts by weight of the total composition, excluding any filler.

Useful flame retardants include organic compounds that include phosphorus, bromine, and/or chlorine. Non-brominated and non-chlorinated phosphorus-containing flame retardants can be preferred in certain applications for regulatory reasons, for example organic phosphates and organic compounds containing phosphorus-nitrogen bonds.

Inorganic flame retardants can also be used, for example salts of C1-16 alkyl sulfonate salts such as potassium perfluorobutane sulfonate (Rimar salt), potassium perfluoroctane sulfonate, tetraethylammonium perfluorohexane sulfonate, and potassium diphenylsulfone sulfonate; salts such as $Na_2CO_3$, $K_2CO_3$, $MgCO_3$, $CaCO_3$, and $BaCO_3$, or fluoro-anion complexes such as $Li_3AlF_6$, $BaSiF_6$, $KBF_4$, $K_3AlF_6$, $KAlF_4$, $K_2SiF_6$, and/or $Na_3AlF_6$. When present, inorganic flame retardant salts are present in amounts of 0.01 to 10 parts by weight, more specifically 0.02 to 1 parts by weight, based on 100 parts by weight of the total composition, excluding any filler.

Anti-drip agents can also be used in the composition, for example a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. A TSAN comprises 50 wt% PTFE and 50 wt% SAN, based on the total weight of the encapsulated fluoropolymer. The SAN can comprise, for example, 75 wt% styrene and 25 wt% acrylonitrile based on the total weight of the copolymer. Antidrip agents can be used in amounts of 0.1 to 10 parts by weight, based on 100 parts by weight of the total composition, excluding any filler.

The resin compositions can be formed by techniques known to those skilled in the art. Extrusion and mixing techniques, for example, may be utilized to combine the components of the resin composition.

The resin compositions of the present disclosure can be blended with the aforementioned ingredients by a variety of methods involving intimate admixing of the materials with any additional additives desired in the formulation. Because of the availability of melt blending equipment in commercial polymer processing facilities, melt processing methods are generally preferred. Illustrative examples of equipment used in such melt processing methods include co-rotating and counter-rotating extruders, single screw extruders, co-kneaders, disc-pack processors and various other types of extrusion equipment. The temperature of the melt in the present process is preferably minimized in order to avoid excessive degradation of the resins. It is often desirable to maintain the melt temperature between about 230 °C and about 350 °C in the molten resin composition, although higher temperatures can be used provided that the residence time of the resin in the processing equipment is kept short. In some aspects the melt processed composition exits processing equipment such as an extruder through small exit holes in a die. The resulting strands of molten resin are cooled by passing the strands through a water bath. The cooled strands can be chopped into small pellets for packaging and further handling.

Compositions may be manufactured by various methods, including batch or continuous techniques that employ kneaders, extruders, mixers, and the like. For example, the composition can be formed as a melt blend employing a twin-screw extruder. In some aspects at least some of the components are added sequentially. For example, the poly(arylene ether) component, the polystyrene component(s), and the impact modifier component can be added to the extruder at the feed throat or in feeding sections adjacent to the feed throat, or in feeding sections adjacent to the feed throat, while the filler component can be added to the extruder in a subsequent feeding section downstream. Alternatively, the sequential addition of the components may be accomplished through multiple extrusions. A composition may be made by preextrusion of selected components, such as the poly(arylene ether) component, the polystyrene component(s), and the impact modifier component to produce a pelletized mixture. A second extrusion can then be employed to combine the preextruded components with the remaining components. The filler component can be added as part of a masterbatch or directly. The extruder can be a two lobe or three lobe twin screw extruder.

In one aspect, the present disclosure pertains to plastic components, for example, that have been shaped, formed, or molded at least in part from the compositions described herein. Also provided are plastic components comprising a resin composition that is formed according to the presently disclosed methods for forming a resin composition.

### *Properties and Articles*

In various aspects, the disclosed compositions may have improved flame retardant performance balanced with good flow, dielectric properties, and heat deflection temperature. Improved flame retardance may be characterized by a V1 or V0 rating when tested in accordance with UL94. The compositions exhibit a low dielectric constant and dissipation factor.

Given the improved FR performance with low dielectric constant and dissipation factor, the disclosed compositions are particularly desirable for applications related to radio frequency efficiency where low dissipation factor is key. For example, antenna and 5G applications. Thus, the disclosed compositions and articles formed therefrom may be useful in electronic applications which require FR retardance and low dielectric properties. The compositions and articles may be especially useful as antenna dipoles for base station and radome applications.

The compositions may exhibit improved high heat resistance characterized by a heat deflection temperature of greater than 120 °C at 0.45 megapascals (MPa) when tested in accordance with ISO 75.

In various aspects, the present disclosure relates to articles comprising the compositions herein. The compositions can be molded into useful shaped articles by a variety of means such as injection molding, extrusion, rotational molding, blow molding and thermoforming to form articles. The compositions can be useful in the manufacture of articles requiring materials with good flow, good impact strength, and good dielectric properties.

The advantageous characteristics of the compositions disclosed herein make them appropriate for an array of uses.

### Methods of Manufacture

Aspects of the disclosure further relate to methods for making a thermoplastic composition. The one or any

foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (for example, the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

Methods may further comprise processing the composite to provide a plaque of a desired thickness. Plaques can be extruded, injection molded, compression molded, or injection-compression molded, and may have a thickness between about 0.5 mm and 6 mm. Other processes could also be applied to the thin thermoplastic film, including but not limited to, lamination, co-extrusion, thermo-forming or hot pressing. In such aspects, further layers of other materials (for example, other thermoplastic polymer layers, metallic layers, etc.) could be combined with the composite.

Various combinations of elements of this disclosure are encompassed by this disclosure, for example, combinations of elements from dependent claims that depend upon the same independent claim.

**Definitions**

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims, which follow, reference will be made to a number of terms which shall be defined herein.

As used in the specification and the appended claims, the singular forms "a," "an" and "the" include plural referents unless the context clearly dictates otherwise. Thus, for example, reference to "a thermoplastic polymer component" includes mixtures of two or more thermoplastic polymer components. As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the

designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional additional processes" means that the additional processes can or cannot be included and that the description includes methods that both include and that do not include the additional processes.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding aspects to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation is 100.

Unless otherwise stated to the contrary herein, all test standards are the most recent standard in effect at the time of filing this application.

As used herein, the terms "number average molecular weight" or "Mn" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, *e.g.*, polycarbonate polymers, by methods well known to a person having ordinary skill in the art using molecular weight standards, e.g., polycarbonate standards or polystyrene standards, preferably certified or traceable molecular weight standards.

As used herein, the terms "weight average molecular weight" or "Mw" can be used interchangeably, and are defined by the formula:

$$M_w = \frac{\sum N_i M_i^2}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, *e.g.* polycarbonate polymers, by methods well known to a person having ordinary skill in the art using molecular weight standards, *e.g.* polycarbonate standards or polystyrene standards, preferably certified or traceable molecular weight standards.

As used herein, degree of polymerization, n, may describe the number of monomeric units (or repeating units) in a given polymer molecule.

In one aspect, "substantially free of' can be less than about 0.5 weight percent (wt.%). In another aspect, substantially free of can be less than about 0.1 wt.%. In another aspect, substantially free of can be less than about 0.01 wt.%. In yet another aspect, substantially free of can be less than about 100 ppm. In yet another aspect, substantially free can refer to an amount, if present at all, below a detectable level. In one aspect, the compositions of the present disclosure are free of or substantially free of carbon filler or carbon-based filler.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

## Aspects of the Disclosure

In various aspects, the present disclosure pertains to and includes at least the following aspects.

Aspect 1. A composition comprising: from about 35 wt. % to about 85 wt. % of a polyphenylene ether component; from about 1 wt. % to about 55 wt. % of a polystyrene component; and from about 5 wt. % to about 25 wt. % of a flame retardant agent comprising an aromatic phosphoric ester, wherein the combined weight percent value of all components does not exceed 100 wt %, and all weight percent values are based on the total weight of the composition, and wherein the composition exhibits at least a V1 flame rating at 1.5 mm measured according to UL 94 (2021) and a dissipation factor less than 0.002 when tested using a split post dielectric resonator and network analyzer.

Aspect 2. The composition of aspect 1, wherein the composition exhibits a heat deflection temperature (HDT) greater than 120 °C when tested in accordance with ISO 75 at 0.45 MPa.

Aspect 3. A composition comprising: from about 35 wt. % to about 85 wt. % of a polyphenylene ether component; from about 1 wt. % to about 55 wt. % of a polystyrene component; and from about 5 wt. % to about 25 wt. % of a flame retardant agent comprising an aromatic phosphoric ester, wherein the combined weight percent value of all components does not exceed 100 wt %, and all weight percent values are based on the total weight of the composition, and wherein the composition exhibits at least a V1 flame rating at 1.5 mm measured according to UL 94 (2021), a heat deflection temperature (HDT) greater than 120 °C when tested in accordance with ISO 75 at 0.45 MPa, and a dissipation factor less than 0.002 when tested using a split post dielectric resonator and network analyzer.

Aspect 4. The composition according to any one of aspects 1-3, wherein the polyphenylene ether component comprises poly(2,6-dimethyl-1,4-phenylene ether).

Aspect 5. The composition according to any one of aspects 1-4, wherein the polystyrene component comprises high impact polystyrene or general purpose polystyrene.

Aspect 6. The composition according to any one of aspects 1-3, wherein the aromatic phosphoric ester comprises a compound according to Formula I

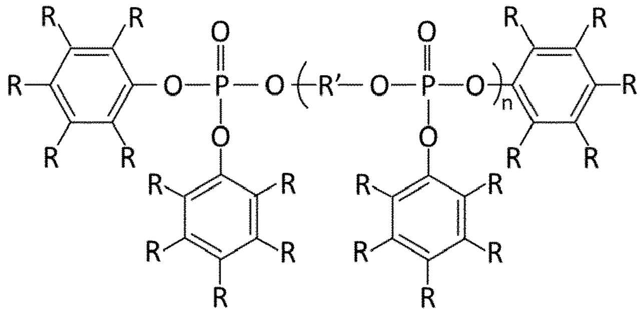

Formula I,

Aspect 7. wherein each occurrence of R is independently unsubstituted or substituted $C_1$-$C_{12}$ hydrocarbyl and at least one R is not unsubstituted; n has an average value of 1 or more, and each occurrence of R' can be selected from

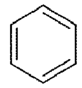 , 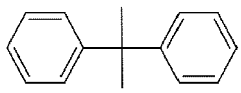 ,

and

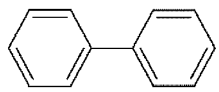 .

Aspect 8. The composition according to any one of aspects 1-7, wherein the aromatic phosphoric ester comprises a compound according to Formula II

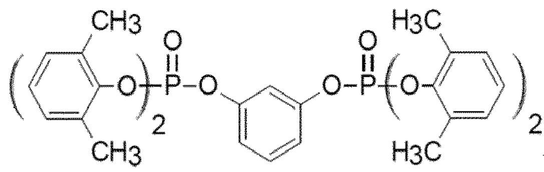

Formula II.

Aspect 9. The composition according to any one of aspects 1-8, wherein the aromatic phosphoric ester has a melting point between 80 °C and 200 °C.

Aspect 10. The composition according to any one of aspects 1-8, further comprising an additive material, the additive material selected from the group consisting of: a metal deactivator; an acid scavenger; an antioxidant; a colorant; a dye; a flow promoter; an impact modifier; a light stabilizer; a lubricant; a mold release agent; a pigment; a colorant, a quenching agent; a thermal stabilizer; an ultraviolet (UV) absorbant; a UV reflectant; a UV stabilizer; a flame retardant; and combinations thereof

Aspect 11. The composition according to aspect 10, comprising from about 0.01 wt.% to about 3 wt. % of the additive material comprising one or more of a metal deactivator, an acid scavenger, a mold release agent, and an antioxidant.

Aspect 12. The composition according to aspect 10 or 11, wherein the additive material comprises an impact modifier comprising a styrene rubber copolymer.

Aspect 13. The composition according to any one of aspects 1-12 wherein the composition is substantially free of bisphenol A bis(diphenyl phosphate) BPADP, resorcinol bis(diphenyl Phosphate) RDP, triphenyl phosphate TPP, or aluminum diethyl-phosphinate.

Aspect 14. The composition according to any one of aspects 1-13, wherein the composition is free of epoxy.

Aspect 15. The composition according to any one of aspects 1-14, wherein the composition exhibits a melt flow rate of at least 15 g/10 minutes when tested in accordance with ASTM D1238 at 300 °C and 5 kg load or a melt volume rate of at least 15 $cm^3$ /10 minutes when tested in accordance with ISO 1133 at 300 °C and 5 kg load.

Aspect 16. The composition of any one of aspects 1-15, further comprising a poly(phenylene ether)-polysiloxane

block copolymer reaction product and wherein the composition exhibits a $V_0$ flame rating at 1.5 mm measured according to UL 94.

Aspect 17. The composition of aspect 16, wherein the poly(phenylene ether)-polysiloxane block copolymer reaction product comprises a poly(phenylene ether), and a poly(phenylene ether)-polysiloxane block copolymer, wherein the poly(phenylene ether)-polysiloxane block copolymer comprises a poly(phenylene ether) block, and a polysiloxane block comprising, on average, 20 to 80 siloxane repeating units; wherein the poly(phenylene ether)-polysiloxane block copolymer reaction product comprises 1 to 30 weight percent siloxane repeat units and 70 to 99 weight percent phenylene ether repeat units, based on the total weight of the poly(phenylene ether)-polysiloxane block copolymer reaction product.

Aspect 18. A composition comprising: from about 30 wt. % to about 85 wt. % of a polyphenylene ether component; from about 8 wt. % to about 50 wt. % of a poly(phenylene ether)-polysiloxane block copolymer reaction product; from about 1 wt. % to about 55 wt. % of a polystyrene component; from about 5 wt. % to about 25 wt. % of a flame retardant agent comprising an aromatic phosphoric ester, wherein the combined weight percent value of all components does not exceed 100 wt %, and all weight percent values are based on the total weight of the composition, and wherein the composition exhibits at least a V0 flame rating at 1.5 mm measured according to UL 94 (2021), a heat deflection temperature (HDT) greater than 120 °C when tested in accordance with ISO 75 at 0.45MPa, a dissipation factor less than 0.002 when tested using a split post dielectric resonator and network analyzer.

Aspect 19. an article formed from the composition of any one of aspects 1-18.

Aspect 20. The article according to aspect 19, wherein the article is an antenna or an antenna concealing enclosure.

Aspect 21. A method of forming an article, the method comprising: Combining, to form a mixture: from about 35 wt. % to about 85 wt. % of a polyphenylene ether component; from about 1 wt. % to about 55 wt. % of a polystyrene component; and from about 5 wt. % to about 25 wt. % of a flame retardant agent comprising an aromatic phosphoric ester, wherein the combined weight percent value of all components does not exceed 100 wt %, and all weight percent values are based on the total weight of the composition; and molding an article from the mixture, wherein the article exhibits at least a V1 flame rating at 1.5 mm measured according to UL 94 (2021) and a dissipation factor less than 0.002 when tested using a split post dielectric resonator and network analyzer.

Aspect 22. The method of aspect 21, wherein the article exhibits a heat deflection temperature (HDT) greater than 120 °C when tested in accordance with ISO 75 at 0.45 MPa.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of mixing conditions, e.g., component concentrations, extruder design, feed rates, screw speeds, temperatures, pressures and other mixing ranges and conditions that can be used to optimize the product purity and yield obtained from the described process. Only reasonable and routine experimentation will be required to optimize such process conditions.

Various PPE resins were prepared from the raw materials presented in Table 1.

Table 1. Experimental materials.

| Component | Description | Product supplier | Function |
|---|---|---|---|
| PPE | Poly(2,6-dimethyl-1,4-phenylene ether), CAS Reg. No. 25134-01-4, having an intrinsic viscosity of 0.46 deciliter/gram, determined at 25 °C in chloroform by Ubbelohde viscometer. | SABIC | Resin |

(continued)

| Component | Description | Product supplier | Function |
|---|---|---|---|
| PPE-Si | Poly(2,6-dimethyl-1,4-phenylene ether)-polydimethylsiloxane block copolymer reaction product, the reaction product containing a mixture of poly(2,6-dimethyl-1,4-phenylene ether), CAS Reg. No. 25134-01-4, and poly(2,6-dimethyl-1,4-phenylene ether)-polydimethylsiloxane block copolymer, CAS Reg. No. 1202019-56-4; the reaction product having a polydimethylsiloxane content of about 5 weight percent based on the total weight of the reaction product, and an intrinsic viscosity of 0.40 deciliter/gram, determined at 25 °C in chloroform by Ubbelohde viscometer. | SABIC | Resin |
| HIPS | High impact polystyrene, CAS Reg. No. 9003-55-8; obtained as ET60 | Idemitsu | Resin |
| GPPS | General purpose polystyrene, CAS Reg. No. 9003-53-6; obtained as STYRON 680A | Trinseo | Resin |
| SEBS | Polystyrene-poly(ethylene-butylene)-polystyrene triblock copolymer, CAS Reg. No. 66070-58-4, having a polystyrene content of 30-33 weight percent; obtained as G1651 | Kraton | Resin |
| BPADP | Bisphenol A bis(diphenyl phosphate), CAS Reg. No. 181028-79-5; obtained as CR-741 | Daihachi Chemical | FR agent |
| RDP | Resorcinol bis(diphenyl Phosphate), CAS Reg. No. 57583-54-7; obtained as PhireGuard RDP | Yoke Technology | FR agent |
| TPP | Triphenyl phosphate, CAS Reg. No. 115-86-6 | Daihachi Chemical | FR agent |
| DEPAL | Aluminum diethyl-phosphinate, CAS Reg. No. 225789-38-8; obtained as Exolit OP1230 | Clariant | FR agent |
| Tetrakis(2,6-dimethylphenyl) 1,3-phenylene bisphosphate | Tetrakis(2,6-dimethylphenyl) 1,3-phenylene bisphosphate, CAS Reg. No. 139189-30-3; obtained as PX-200 | Daihachi Chemical | FR agent |
| Additive Package | zinc sulfide (metal deactivator) / magnesium oxide or zinc oxide (acid scavengers) / liner low density polyethylene LLDPE (mold release agent) / tris(2,4-di-tert-butylphenyl)phosphite (stabilizer). | various | |

Compounding conditions are presented in Table 2. Formulations were compounded on lab twin-screw extruder (Toshiba TEM-37BS) with all components added through the throat feeder, except RDP and BPADP added through a liquid feeder. The compounding proceeded under screw rotation at 300 rpm with 25-30 kg/h of throughput. Table 2 shows the profile for compounding.

Table 2. Compounding conditions.

| | | |
|---|---|---|
| Zone 1 temperature | °C | 50 |
| Zone 2 temperature | °C | 150 |
| Zone 3 temperature | °C | 280 |
| Zone 4 temperature | °C | 280 |
| Zone 5 temperature | °C | 270 |
| Zone 6 temperature | °C | 280 |
| Zone 7 temperature | °C | 280 |

(continued)

| | | |
|---|---|---|
| Zone 8 temperature | °C | 290 |
| Zone 9 temperature | °C | 290 |
| Zone 10 temperature | °C | 290 |
| Zone 11 temperature | °C | 290 |
| Zone 12 temperature | °C | 290 |
| Die temperature | °C | 290 |

Injection molding was performed on a Sumitomo DEMAG SE180EV molding machine to form plaques for dielectric (Dk, Df) measurement, on a FANUC S-2000i 100A molding machine for bars for HDT test and on a NESTAL SYNERGY 1500K molding machine for flame bars. Molding conditions are shown in Table 3.

Table 3. Injection molding conditions.

| Molding parameters | unit | Value |
|---|---|---|
| Pre-drying time | Hour | 4 |
| Pre-drying temperature | °C | 120 |
| Zone 1 temperature | °C | 280 |
| Zone 2 temperature | °C | 290 |
| Zone 3 temperature | °C | 300 |
| Nozzle temperature | °C | 300 |
| Mold temperature | °C | 75 - 120 |

Testing. Flammability was measured by Vertical Burning Test on 1.5mm thickness flame bars according to UL94.

Dielectric constant (Dk) / loss (Df) was measured on 100*70*0.75mm or 75*75*2mm plaques at 1.9 GHz, using SABIC method with QWED split post dielectric resonator and Agilent PNA network analyzer.

MFR and MVR was measured at 300°C, 5kg load, according to ASTM D1238 and ISO1133, respectively.

Heat deflection temperature (HDT) was determined using a 0.45 MPa load on 4mm thick bars according to ISO75.

Formulations are presented in Table 4. Comparative examples CEx1 - CEx5 each include a conventional flame retardant agent (BPADP, RDP, TPP, or DEPAL). Inventive Example Ex1 includes tetrakis(2,6-dimethylphenyl) 1,3-phenylene bisphosphate.

Table 4. Flammability, dielectric, and flow properties

| | CEx 1 | CEx 2 | CEx 3 | CEx 4 | CEx 5 | Ex1 |
|---|---|---|---|---|---|---|
| **COMPOSITIONS** | | | | | | |
| **PPE** | 49.13 | 44.13 | 44.13 | 44.13 | 44.13 | 44.13 |
| **HIPS** | 49.13 | 44.13 | 44.13 | 44.13 | 44.13 | 44.13 |
| **Tetrakis(2,6-dimethylphenyl) 1,3-phenylene bisphosphate** | | | | | | 10.00 |
| **BPADP** | | 10.00 | | | | |
| **RDP** | | | 10.00 | | | |
| **TPP** | | | | 10.00 | | |
| **DEPAL** | | | | | 10.00 | |
| **Additives** | 1.74 | 1.74 | 1.74 | 1.74 | 1.74 | 1.74 |

(continued)

| PROPERTIES | | | | | | |
|---|---|---|---|---|---|---|
| Dk | 2.57 | 2.60 | 2.64 | 2.68 | 2.55 | 2.58 |
| Df | 0.0013 | 0.0021 | 0.0039 | 0.0053 | 0.0019 | 0.0016 |
| HDT, °C | 137 | 109 | 106 | 102 | 139 | 112 |
| UL94,1.5mm | No classificatio n | V2 | V2 | V1 | V1 | V1 |
| MFR, g/10min | 16 | 44 | 45 | 54 | 12 | 57 |

Table 4. shows that flammability is improved by incorporation of all types of FR agents. Ex1 composition shows better FR properties (VI), and the lowest Df and second lowest Dk than all the FR-containing comparative examples (CEx2-5). The good dielectric properties in Ex1 can be due to the special molecular structure of the FR agent which provides greater steric hindrance than other phosphate FR agents -. Although Ex1 and CEx5 have comparable Dk, Ex-1 exhibits much higher flow ability than CEx5, which can facilitate molding process for thin part in electronics.

Further formulations were prepared including PPE-Si resin and are presented in Table 5.

| | CEx6 | Ex2 | Ex3 | Ex4 | Ex5 |
|---|---|---|---|---|---|
| **COMPOSITIONS** | | | | | |
| **PPE** | 74.70 | 74.70 | 74.70 | 54.70 | 39.70 |
| **PPE-Si** | | | | 20.00 | 35.00 |
| **GPPS** | 20.00 | 10.00 | 5.00 | 10.00 | 10.00 |
| **SEBS** | 4.00 | 4.00 | 4.00 | 4.00 | 4.00 |
| **Tetrakis(2,6-dimethylphe nyl) 1,3-phenylene bisphosphate** | | 10.00 | 15.00 | 10.00 | 10.00 |
| **Additives** | 1.30 | 1.30 | 1.30 | 1.30 | 1.30 |
| **PROPERTIES** | | | | | |
| **Dk** | 2.56 | 2.60 | 2.62 | 2.60 | 2.61 |
| **Df** | 0.0012 | 0.0013 | 0.0013 | 0.0015 | 0.0016 |
| **HDT, °C** | 163 | 144 | 134 | 142 | 141 |
| **UL94, 1.5mm** | No classification | V1 | V0 | V0 | V0 |
| **MVR, $cm^3$/10min** | 9 | 19 | 28 | 20 | 21 |

Table 5. exhibits that flammability and flow ability is further improved by increased Tetrakis(2,6-dimethylphenyl) 1,3-phenylene bisphosphate content, while the compounds still keep low Dk, Df values. The addition of PPE-Si can help to achieve V0 with lower FR agent content. Ex2 to Ex5 also show high HDT values.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the disclosure should be determined with reference to the appended claims, along with the full scope of equivalents to which such claims are entitled.

It will be apparent to those skilled in the art that various modifications and variations can be made in the present disclosure without departing from the scope or spirit of the disclosure. Other embodiments of the disclosure will be

apparent to those skilled in the art from consideration of the specification and practice of the disclosure disclosed herein. It is intended that the specification and examples be considered as exemplary only, with a true scope and spirit of the disclosure being indicated by the following claims.

The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims. It is understood that the compositions disclosed herein have certain functions. Disclosed herein are certain structural requirements for performing the disclosed functions, and it is understood that there are a variety of structures that can perform the same function that are related to the disclosed structures, and that these structures will typically achieve the same result.

## Claims

1. A composition comprising:

   from about 35 wt. % to about 85 wt. % of a polyphenylene ether component;
   from about 1 wt. % to about 55 wt. % of a polystyrene component; and
   from about 5 wt. % to about 25 wt. % of a flame retardant agent comprising an aromatic phosphoric ester, wherein the combined weight percent value of all components does not exceed 100 wt %, and all weight percent values are based on the total weight of the composition,
   and wherein the composition exhibits
   at least a V1 flame rating at 1.5 mm measured according to UL 94 (2021), and a dissipation factor less than 0.002 when tested using a split post dielectric resonator and network analyzer.

2. The composition according to claim 1, wherein the polyphenylene ether component comprises poly(2,6-dimethyl-1,4-phenylene ether).

3. The composition according to any one of claims 1-2, wherein the polystyrene component comprises high impact polystyrene or general purpose polystyrene.

4. The composition according to any one of claims 1-3, wherein the aromatic phosphoric ester comprises a compound according to Formula I

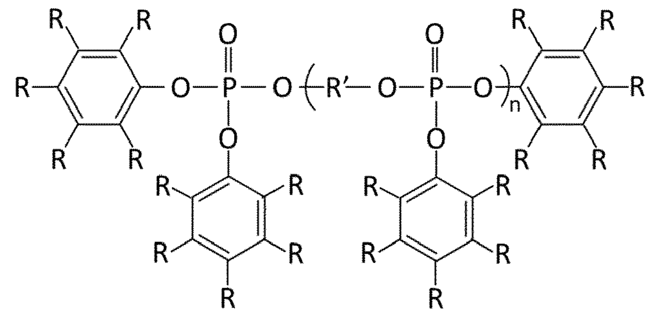

Formula I,

wherein each occurrence of R is independently unsubstituted or substituted $C_1$-$C_{12}$ hydrocarbyl and at least one R is not unsubstituted; n has an average value of 1 or more, and each occurrence of R' can be selected from

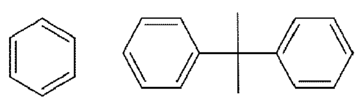

, ,

and

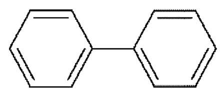

.

5. The composition according to any one of claims 1-4, wherein the aromatic phosphoric ester comprises a compound according to Formula II

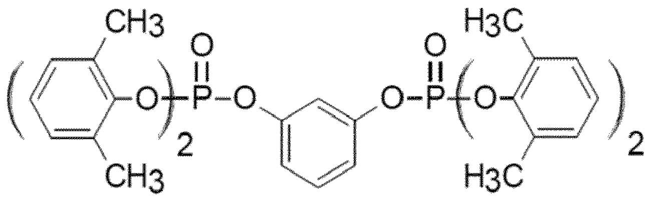

Formula II.

6. The composition according to any one of claims 1-5, wherein the aromatic phosphoric ester has a melting point between 80 °C and 200 °C.

7. The composition according to any one of claims 1-6, further comprising an additive material, the additive material selected from the group consisting of: a metal deactivator; an acid scavenger; an antioxidant; a colorant; a dye; a flow promoter; an impact modifier; a light stabilizer; a lubricant; a mold release agent; a pigment; a colorant, a quenching agent; a thermal stabilizer; an ultraviolet (UV) absorbant; a UV reflectant; a UV stabilizer; a flame retardant; and combinations thereof.

8. The composition according to claim 7, comprising from about 0.01 wt.% to about 3 wt. % of the additive material comprising one or more of a metal deactivator, an acid scavenger, a mold release agent, and an antioxidant.

9. The composition according to any one of claims 1-8, wherein the composition is substantially free of bisphenol A bis(diphenyl phosphate) BPADP, resorcinol bis(diphenyl Phosphate) RDP, triphenyl phosphate TPP, or aluminum diethyl-phosphinate.

10. The composition according to any one of claims 1-9, wherein the composition is free of epoxy.

11. The composition according to any one of claims 1-10, further comprising a poly(phenylene ether)-polysiloxane block copolymer reaction product and wherein the composition exhibits a $V_0$ flame rating at 1.5 mm measured according to UL 94.

12. The composition according to claim 11, wherein the poly(phenylene ether)-polysiloxane block copolymer reaction product comprises a poly(phenylene ether) and a poly(phenylene ether)-polysiloxane block copolymer,

wherein the poly(phenylene ether)-polysiloxane block copolymer comprises a poly(phenylene ether) block and a polysiloxane block comprising, on average, 20 to 80 siloxane repeating units, and
wherein the poly(phenylene ether)-polysiloxane block copolymer reaction product comprises 1 to 30 weight percent siloxane repeat units and 70 to 99 weight percent phenylene ether repeat units, based on the total weight of the poly(phenylene ether)-polysiloxane block copolymer reaction product.

13. The composition according to any one of claims 1-12, wherein the composition exhibits a heat deflection temperature (HDT) greater than 120 °C when tested in accordance with ISO 75 at 0.45MPa.

14. A method of forming an article, the method comprising:

a. combining, to form a mixture

i. from about 35 wt. % to about 85 wt. % of a polyphenylene ether component,
ii. from about 1 wt. % to about 55 wt. % of a polystyrene component, and
iii. from about 5 wt. % to about 25 wt. % of a flame retardant agent comprising an aromatic phosphoric ester,

wherein the combined weight percent value of all components does not exceed 100 wt %, and all weight percent values are based on the total weight of the composition; and
b. molding an article from the mixture,

wherein the article exhibits

at least a V1 flame rating at 1.5 mm measured according to UL 94 (2021), and
a dissipation factor less than 0.002 when tested using a split post dielectric resonator and network analyzer.

**15.** The method of claim 14, wherein the article exhibits a heat deflection temperature (HDT) greater than 120 °C when tested in accordance with ISO 75 at 0.45MPa.

Europäisches Patentamt
European Patent Office
Office européen des brevets

# EUROPEAN SEARCH REPORT

Application Number
EP 22 17 9479

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 004 675 A (SHENZHEN COTRAN XINYUAN NEW MAT CO LTD) 22 June 2021 (2021-06-22)<br>* claims 1-9 *<br>* example 2 *<br>* paragraph [0107]; table 1 *<br>----- | 1-10,<br>13-15 | INV.<br>C08L71/12 |
| X | CN 112 143 207 A (HENGDIAN GROUP DEBANG ENG PLASTIC CO LTD)<br>29 December 2020 (2020-12-29)<br>* paragraph [0035]; table 1 *<br>* paragraph [0054]; table 2 *<br>----- | 1-10,<br>13-15 | |
| X | EP 0 509 506 A2 (DAIHACHI CHEM IND [JP])<br>21 October 1992 (1992-10-21)<br>* claims 1,6,7 *<br>* compound 2;<br>example 8; table 3 *<br>----- | 1-10,<br>13-15 | |
| X | US 8 791 181 B2 (LIETZAU CHRISTIAN [US]; SATO SHO [JP] ET AL.)<br>29 July 2014 (2014-07-29)<br>* claim 1 *<br>* column 41; table 5 *<br>----- | 1,2,7,8,<br>10-15 | TECHNICAL FIELDS SEARCHED (IPC)<br>C08L<br>C08K |
| X | JP 2003 082224 A (ASAHI KASEI CHEMICALS CORP [JP]) 19 March 2003 (2003-03-19)<br>* tables 1-3 *<br>----- | 1-10,<br>13-15 | |
| X | JP 2019 073600 A (ASAHI KASEI CORP)<br>16 May 2019 (2019-05-16)<br>* page 22; table 1 *<br>----- | 1-10,<br>13-15 | |

The present search report has been drawn up for all claims

1

| Place of search | Date of completion of the search | Examiner |
|---|---|---|
| The Hague | 6 December 2022 | O'Sullivan, Timothy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 22 17 9479

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2022

| Patent document cited in search report | Publication date | Patent family member(s) | Publication date |
|---|---|---|---|
| CN 113004675 A | 22-06-2021 | NONE | |
| CN 112143207 A | 29-12-2020 | NONE | |
| EP 0509506 A2 | 21-10-1992 | DE 69220532 T2 | 18-12-1997 |
| | | EP 0509506 A2 | 21-10-1992 |
| | | JP 2552780 B2 | 13-11-1996 |
| | | JP H051079 A | 08-01-1993 |
| US 8791181 B2 | 29-07-2014 | CN 104704061 A | 10-06-2015 |
| | | EP 2917283 A1 | 16-09-2015 |
| | | JP 6230614 B2 | 15-11-2017 |
| | | JP 2015533925 A | 26-11-2015 |
| | | KR 20150082511 A | 15-07-2015 |
| | | US 2014128522 A1 | 08-05-2014 |
| | | US 2014243460 A1 | 28-08-2014 |
| | | US 2014243461 A1 | 28-08-2014 |
| | | WO 2014074466 A1 | 15-05-2014 |
| JP 2003082224 A | 19-03-2003 | JP 3923764 B2 | 06-06-2007 |
| | | JP 2003082224 A | 19-03-2003 |
| JP 2019073600 A | 16-05-2019 | CN 109666283 A | 23-04-2019 |
| | | JP 7097167 B2 | 07-07-2022 |
| | | JP 2019073600 A | 16-05-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7371790 B
- JP 2004137491 B
- JP 2017110072 B
- JP 2019073600 A
- US 8017697 B, Carillo
- US 8669332 B


### Non-patent literature cited in the description


- *CHEMICAL ABSTRACTS,* 25134-01-4
- *CHEMICAL ABSTRACTS,* 1202019-56-4
- *CHEMICAL ABSTRACTS,* 9003-55-8
- *CHEMICAL ABSTRACTS,* 9003-53-6
- *CHEMICAL ABSTRACTS,* 66070-58-4
- *CHEMICAL ABSTRACTS,* 181028-79-5
- *CHEMICAL ABSTRACTS,* 57583-54-7
- *CHEMICAL ABSTRACTS,* 115-86-6
- *CHEMICAL ABSTRACTS,* 225789-38-8
- *CHEMICAL ABSTRACTS,* 139189-30-3